# FASCICULE DE BREVET EUROPEEN

(11) **EP 3 900 368 B1**
(45) Date de publication et mention de la délivrance du brevet: **22.01.2025**
(21) Numéro de dépôt: 19828733.6
(22) Date de dépôt: 19.12.2019
(51) Int. Cl.: H04N 21/239, A47J 43/00, A47J 44/00, H04N 21/414, H04N 21/426, H04N 21/431, H04N 21/433, H04N 21/482

(54) **PROCEDE DE TRAITEMENT DE CONTENUS NON STRUCTURES PAR UN APPAREIL CULINAIRE**
VERFAHREN ZUR VERARBEITUNG UNSTRUKTURIERTER INHALTE DURCH EINE KULINARISCHE VORRICHTUNG
METHOD FOR PROCESSING NON-STRUCTURED CONTENTS BY A CULINARY APPARATUS

(30) Priorité: 21.12.2018 FR 1873847
(43) Date de publication de la demande: 27.10.2021
(73) Titulaire: SEB S.A., 69130 Ecully (FR)
(72) Inventeur: TADLA, Jérémy, 69380 LOZANNE (FR)
(74) Mandataire: Germain Maureau
(86) Numéro de dépôt international: PCT/EP2019/086229
(87) Numéro de publication internationale: WO 2020/127679

(56) Documents cités:
- WO-A1-2018/185418
- GB-A- 2 546 507
- US-A1- 2015 095 958
- US-B1- 6 949 729
- ANONYMOUS: "File/FTP Adapter - Large File Transfer (Chunk Mode) | SAP Blogs", 26 December 2011 (2011-12-26), XP055613486, Retrieved from the Internet <URL:https://blogs.sap.com/2011/12/26/fileftp-adapter-large-file-transfer-chunk-mode/> [retrieved on 20190816]

## Description

### DOMAINE DE L'INVENTION

La présente invention concerne un procédé de traitement de contenus non structurés de recettes de cuisine par un appareil culinaire.

### ART ANTERIEUR

Il est connu d'utiliser un appareil culinaire comprenant une unité de connexion configurée pour télécharger des contenus relatifs à des recettes de cuisine à partir d'un serveur. Les contenus peuvent correspondre à des fichiers textes, images et/ou vidéos.

L'appareil culinaire peut également être configuré pour rechercher des contenus présents dans le serveur selon un critère de recherche comme par exemple les contenus relatifs à des recettes comprenant un aliment donné.

Une fois un résultat comprenant les contenus défini, l'utilisateur de l'appareil culinaire peut demander un téléchargement de ces contenus pour les visionner. Cette disposition est utile dans le sens où elle permet à l'utilisateur d'avoir accès sur l'appareil culinaire à un ensemble de contenus correspondant à un critère de recherche.

Cependant lorsque le nombre de contenus ou leur taille est importante, il est nécessaire de prévoir un appareil culinaire comprenant une unité de connexion apte à recevoir en mémoire l'ensemble de ces contenus.

L'expérience peut également se révéler désagréable pour l'utilisateur si le téléchargement prend trop de temps ou si la connexion s'interrompt.

La présente invention vise à résoudre tout ou partie des inconvénients mentionnés ci-dessus. Le document US6949729B1 divulgue un appareil culinaire permettant de télécharger et de visualiser des recettes.

### EXPOSE DE L'INVENTION

A cet effet, la présente invention concerne un procédé de traitement de contenus non structurés de recettes de cuisine par un appareil culinaire, l'appareil culinaire comprenant :
- une unité de connexion comprenant un module de communication configuré pour recevoir des contenus non structurés en provenance d'au moins un serveur distant et une mémoire, et
- une unité d'affichage comprenant une mémoire configurée pour recevoir lesdits contenus non structurés en provenance de la mémoire de l'unité de connexion et des moyens de traitement configurés pour structurer lesdits contenus non structurés de recettes de cuisine,
le procédé de traitement de contenus non structurés de recettes de cuisine comprenant les étapes suivantes :
- une étape E1 d'établissement d'une connexion sécurisée entre l'appareil culinaire et l'au moins un serveur distant comprenant un envoi d'une requête d'établissement d'une connexion sécurisée par l'appareil culinaire à destination de l'au moins un serveur distant, l'au moins un serveur distant imposant une restriction de la connexion sécurisée relative à une quantité maximale de contenus non structurés à télécharger sur l'appareil culinaire et/ou une durée déterminée de maintien de la connexion sécurisée,
- une étape E2 d'envoi d'une requête de recherche de recettes de cuisines à destination de l'au moins un serveur distant en utilisant la connexion sécurisée,
- une étape E3 de réception d'un résultat relatif à ladite requête de recherche de recettes de cuisine, le résultat comprenant une liste ordonnée de contenus non structurées aptes à être téléchargés,
- une étape E4 d'envoi à destination de l'au moins un serveur distant d'une demande de téléchargement d'un groupe de contenus non structurés consécutifs de la liste ordonnée,
- une étape E5 de téléchargement et de stockage dans un espace de la mémoire de l'unité de connexion de tout ou partie de chaque contenu non structuré du groupe de contenus non structurés consécutifs de la liste ordonnée jusqu'à atteindre la restriction imposée par la connexion sécurisée,
- une étape E6 de transfert de chaque contenu non structuré stocké dans un espace de la mémoire de l'unité de connexion vers un espace de la mémoire de l'unité d'affichage, chaque contenu non structuré transféré depuis la mémoire de
l'unité de connexion vers la mémoire de l'unité d'affichage libérant un même espace de la mémoire de l'unité de connexion de manière à continuer l'étape de téléchargement et de stockage,
- une étape E7 de structuration des contenus non structurés stockés dans la mémoire de l'unité d'affichage par les moyens de traitement de l'unité d'affichage.

En d'autres termes, le maintien de la connexion sécurisée pendant la durée déterminée et/ou suivant une quantité maximale de contenus non structurés à télécharger correspond à l'établissement d'une connexion sécurisée persistante.

L'unité de connexion est agencée pour transférer des contenus non structurés téléchargeables réceptionnés de manière à libérer un espace de sa mémoire. Cette disposition permet à l'unité de connexion de réceptionner d'autres contenus non structurés téléchargeables.

Ainsi, il est possible de transférer de grandes quantités de contenus non structurés de l'unité de connexion à l'unité d'affichage sans que les capacités de traitement et/ou la mémoire de l'unité de connexion ne soient limitantes.

En effet, même si un contenu est de taille plus grande que la mémoire de l'unité de connexion sous sa forme structurée, il est possible de le transférer de manière non structurée, c'est-à-dire par portions, à l'unité d'affichage.

La mémoire de l'unité de connexion est distincte de la mémoire de l'unité d'affichage.

Selon un aspect de l'invention, la connexion sécurisée est une connexion impliquant un échange secret de données qui n'est pas destiné à être intercepté par une entité extérieure.

Selon un aspect de l'invention, la connexion sécurisée correspond à l'utilisation d'un protocole de sécurisation d'échanges sur Internet de type «Transport Layer Security » ou TLS.

De préférence, l'appareil culinaire comprend en mémoire un ou plusieurs certificats d'authentification pour l'établissement de la connexion sécurisée.

Ainsi, l'au moins un serveur distant envoie chaque contenu non structuré téléchargeable soit entièrement soit par portions, c'est-à-dire morceaux ou « chunks » que l'appareil culinaire va réassembler lui-même pour reconstituer le contenu structuré correspondant.

Selon un aspect de l'invention, un contenu non structuré comprend plusieurs portions de données distinctes aptes à être téléchargées séparément. Selon un aspect de l'invention, un contenu structuré est en une seule partie et est apte à être exploité par l'unité d'affichage.

Selon un aspect de l'invention, une fois atteinte la restriction imposée par l'établissement de la connexion sécurisée, l'étape E1 est réitérée et :
- soit les étapes E2 à E7 sont réitérées en considérant un nouveau résultat relatif à la même requête de recherche de recettes de cuisine, ou bien
- soit les étapes E2 à E7 sont réitérées en considérant un résultat complémentaire relatif à la requête de recherche établie sur la base des contenus non structurés consécutifs de la liste ordonnée non encore téléchargés, l'étape E1 étant réitérée jusqu'à ce que le groupe des contenus non structurés téléchargeables consécutifs de la liste ordonnée ait été téléchargé.

Cette disposition permet de réinitialiser la restriction établie par le serveur distant en matière de quantité de contenu non structuré téléchargeable et/ou de durée de maintien de la connexion.

Il est ainsi possible de lancer une nouvelle recherche ou alors de poursuivre le téléchargement des contenus non-structurés.

Selon un aspect de l'invention, l'étape de transfert E6 est suivie par et/ou est concomitante d'une étape E61 de substitution et/ou de conservation des contenus structurés et/ou non structurés préalablement en mémoire de l'unité d'affichage.

Cette disposition permet de limiter le nombre de contenus téléchargés enregistrés en mémoire de l'unité d'affichage.

Selon un aspect de l'invention, le procédé de traitement comprend une pluralité d'étapes d'envoi E4 de demandes de téléchargement, chaque étape d'envoi E4 concernant un groupe correspondant de contenus non structurés consécutifs de la liste ordonnée.

Ainsi tant que la restriction de la connexion sécurisée n'est pas atteinte, il est possible de demander le téléchargement d'un nouveau groupe de contenus non structurés consécutifs de la liste ordonnée.

Selon un aspect de l'invention, la pluralité d'étapes d'envoi E4 comprend deux étapes d'envoi E4 de demandes de téléchargement consécutives pour lesquelles les groupes correspondants comprennent au moins un contenu non structuré en commun.

Cette disposition permet d'avoir dans la mémoire de l'unité d'affichage au moins un contenu ayant été structuré par les moyens de traitement correspondant à un contenu non structuré compris dans une nouvelle demande de téléchargement.

Ainsi le temps d'attente pour l'affichage est réduit puisqu'un ou plusieurs contenus peuvent déjà être présents en mémoire de l'unité d'affichage lors d'une nouvelle demande de téléchargement.

Selon un aspect de l'invention, le ou chaque envoi de requête de recherche et/ou de demande de téléchargement résulte d'une interaction d'un utilisateur avec une interface de l'appareil culinaire apte à échanger des données avec l'unité d'affichage.

Cette disposition permet à l'utilisateur d'avoir accès au contenu téléchargeable des résultats sans pour autant avoir à préalablement tous les télécharger sur l'appareil culinaire.

En effet, seule une partie est d'abord téléchargée puis une partie alternative si le demandeur souhaite consulter d'autres contenus téléchargeables des résultats.

Selon un aspect de l'invention, l'unité de connexion est configurée pour échanger des données avec une pluralité de serveurs distants de sorte à établir des connexions sécurisées avec plusieurs serveurs et recevoir différents contenus non structurés de différents serveurs de la pluralité de serveurs.

Cette disposition permet d'optimiser la vitesse de réception des contenus non structurés téléchargés selon la disponibilité des serveurs de la pluralité de serveurs.

Selon un aspect de l'invention, l'unité d'affichage présente des capacités de traitement et/ou de mémoire volatile et/ou non-volatile supérieures aux capacités de traitement et/ou de mémoire volatile et/ou non-volatile de l'unité de connexion.

Selon un aspect de l'invention, l'unité de connexion comprend un microcontrôleur fonctionnant à une fréquence CPU inférieure à 250 MHz.

Selon un aspect de l'invention, le microcontrôleur de l'unité de connexion comprend au maximum 2 Mo de mémoire flash et/ou au maximum 512 ko de mémoire RAM.

Selon un aspect de l'invention, chaque contenu structuré comprend des informations pour l'affichage d'un texte, une image, une vidéo et/ou des instructions de commande de fonctionnement de l'appareil culinaire.

Selon un aspect de l'invention, dans lequel le module de communication de l'unité de connexion est agencé pour se connecter à l'au moins un serveur distant via une passerelle d'un réseau domestique local, ou via un appareil mobile connecté à un réseau mobile, ou encore directement via le réseau mobile.

La présente invention concerne également un produit programme d'ordinateur comprenant des instructions de code agencées pour mettre en œuvre les étapes d'un procédé de traitement tel que décrit ci-dessus lorsque ledit programme est exécuté sur une unité de connexion et une unité d'affichage d'un appareil culinaire.

La présente invention concerne en outre un appareil culinaire comprenant un produit programme d'ordinateur tel que décrit ci-dessus.

La présente invention concerne également un appareil culinaire comprenant une cuve de cuisson agencée pour recevoir des aliments et un élément chauffant agencé pour chauffer tout ou partie de la cuve de cuisson, et éventuellement un moyen de brassage agencé pour brasser les aliments contenus dans la cuve de cuisson.

Les différents aspects définis ci-dessus non incompatibles peuvent être combinés.

### BREVE DESCRIPTION DES FIGURES

L'invention sera mieux comprise à l'aide de la description détaillée qui est exposée ci-dessous en regard du dessin annexé dans lequel :
La figure 1 est une vue schématique d'un appareil culinaire configuré pour communiquer avec deux serveurs distants ;
La figure 2 est un schéma représentant un résultat de recherche sur une interface de l'appareil culinaire ;
La figure 3 est un schéma représentant des contenus sur l'interface de l'appareil culinaire ;
La figure 4 est un diagramme représentant les étapes d'un procédé de traitement de contenus non structurés de recettes de cuisine.

### DESCRIPTION EN REFERENCE AUX FIGURES

Dans la description détaillée qui va suivre des figures définies ci-dessus, les mêmes éléments ou les éléments remplissant des fonctions identiques pourront conserver les mêmes références de manière à simplifier la compréhension de l'invention.

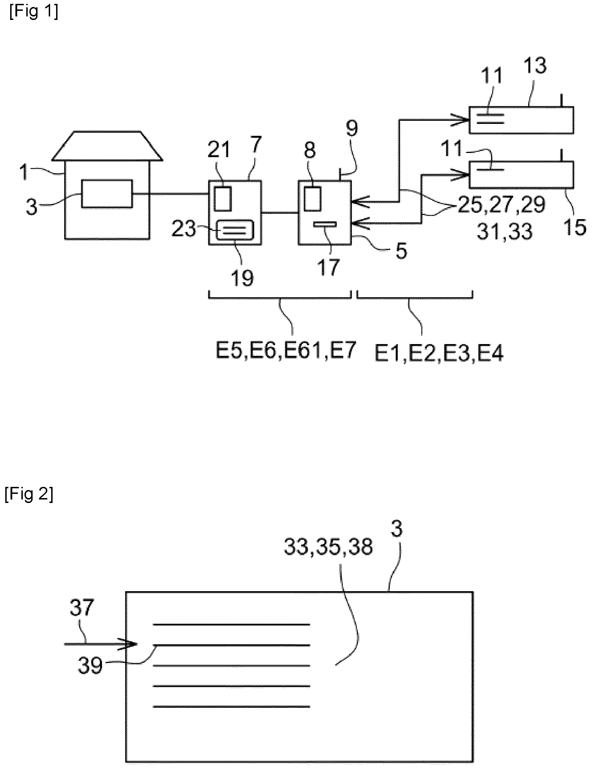

Comme illustré à la figure 1, un appareil culinaire 1 comprend une interface 3, une unité de connexion 5 et une unité d'affichage 7.

L'unité de connexion 5 inclut un microcontrôleur 8. L'unité de connexion 5 comprend un module de communication 9. L'unité de connexion 5 est configuré pour recevoir des contenus non structurés 11 en provenance d'un premier serveur distant 13 et/ou d'un deuxième serveur distant 15.

La réception de ces contenus non structurées 11 peut être réalisée via la connexion à une passerelle d'un réseau domestique local, par exemple une box internet, ou via un appareil mobile connecté à un réseau mobile, notamment un smartphone connecté à un réseau mobile permettant un débit de données suffisant, par exemple un réseau mobile du type 5G ou supérieure, ou encore via la connexion directe à un tel réseau mobile.

L'unité de connexion 5 comprend également une mémoire 17 apte à stocker de manière temporaire les contenus non structurés 11 reçus du premier serveur distant 13 et/ou du deuxième serveur distant 15.

L'unité d'affichage 7 comprend également une mémoire 19 configurée pour recevoir lesdits contenus non structurés 11 en provenance de la mémoire 17 de l'unité de connexion 5.

L'unité d'affichage 7 comprend des moyens de traitement 21 incluant un microcontrôleur et configurés pour structurer lesdits contenus non structurés 11 en contenus structurés 23.

L'unité d'affichage 7 présente des capacités de traitement et/ou de mémoire volatile et/ou non-volatile supérieures aux capacités de traitement et/ou de mémoire volatile et/ou non-volatile de l'unité de connexion 5.

Le microcontrôleur 8 de l'unité de connexion 5 fonctionne à une fréquence CPU inférieure à 250 MHz et comprend au maximum 2 Mo de mémoire flash et/ou au maximum 512 ko de mémoire RAM.

Un contenu non structuré 11 comprend plusieurs portions distinctes de données aptes à être téléchargées séparément. Au contraire, un contenu structuré 23 est un fichier en une seule partie apte à être exploité par l'unité d'affichage 7.

Chaque contenu structuré 23 comprend un texte, une image, une vidéo et/ou des instructions de commande de fonctionnement de l'appareil culinaire 1.

L'unité d'affichage 7 est également agencée pour procéder à l'affichage d'un contenu structuré sur l'interface 3.

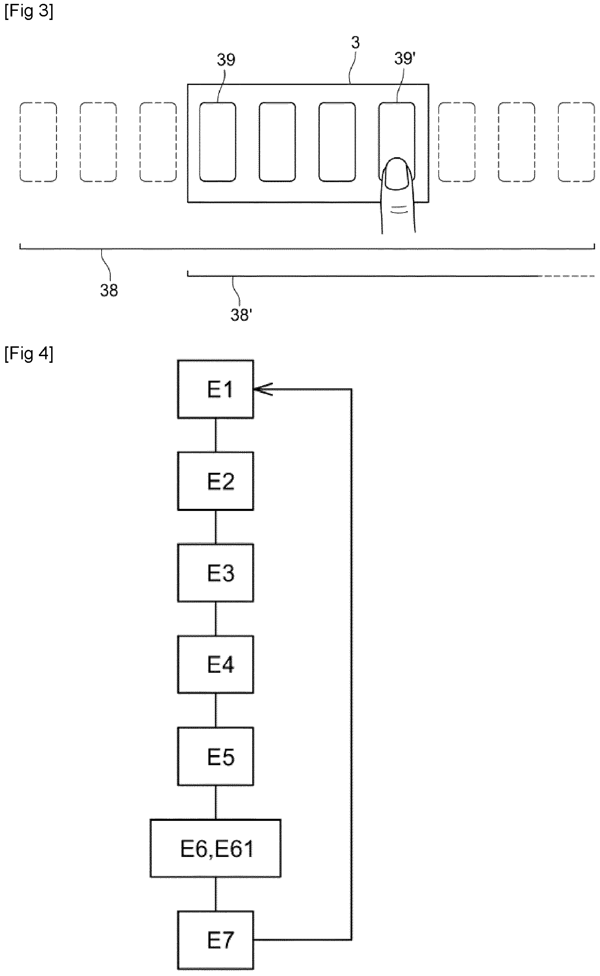

Comme illustré à la figure 4, un procédé de traitement de contenus non structurés 11 de recettes de cuisine par un appareil culinaire 1 comprend les étapes détaillées ci-dessous.

Une étape E1 consiste en l'établissement d'une connexion sécurisée 25 entre l'appareil culinaire 1 et le premier serveur distant 13 et entre l'appareil culinaire 1 et le deuxième serveur distant 15.

Cette étape comprend un envoi d'une requête d'établissement d'une connexion sécurisée 27 par l'appareil culinaire 1 à destination du premier serveur distant 13 et du deuxième serveur distant 15.

Chacun des serveurs distants 13, 15 impose une restriction de la connexion sécurisée 29 relative à une quantité maximale de contenus non structurés 11 à télécharger sur l'appareil culinaire 1 et/ou une durée déterminée de maintien de la connexion sécurisée 25.

Ainsi, l'unité de connexion 5 est configurée pour échanger des données avec les serveurs distants 13, 15 de sorte à établir des connexions sécurisées 25 correspondantes et recevoir différents contenus non structurés 11 des deux serveurs 13, 15.

Chaque connexion sécurisée 25 qui est établie est une connexion sécurisée permanente. Chaque connexion sécurisée 25 est une connexion impliquant un échange secret de données qui n'est pas destiné à être intercepté par une entité extérieure.

Chaque connexion sécurisée 25 correspond à l'utilisation d'un protocole de sécurisation d'échanges sur Internet de type «Transport Layer Security » ou TLS.

Pour ce faire, l'unité de connexion 5 comprend en mémoire 17 un ou plusieurs certificats d'authentification pour l'établissement des connexions sécurisées 25.

Ainsi, les serveurs distants 13, 15 envoient chaque contenu non structuré 11 téléchargeable soit entièrement soit par portions, c'est-à-dire par morceaux ou « chunks » que l'appareil culinaire 1 va réassembler lui-même pour reconstituer le contenu structuré 23 correspondant.

Puisque l'appareil culinaire 1 est connecté à deux serveurs distants 13, 15, les contenus non structurés 11 sont téléchargeables à partir d'un serveur distant 13 ou d'un autre 15 selon leurs disponibilités et/ou la vitesse de téléchargement la plus rapide.

Une étape E2 consiste en l'envoi d'une requête de recherche de recettes de cuisines 31 à destination des serveurs distants 13, 15 en utilisant les connexions sécurisées 25. Cette étape E2 peut être réitérée et une nouvelle recherche effectuée.

La recherche est réalisée selon un critère déterminé comme par exemple un nom d'aliment qui est saisi par l'utilisateur au niveau de l'interface 3 de l'appareil culinaire 1.

Une étape E3 consiste en la réception d'un résultat 33 relatif à ladite requête de recherche de recettes de cuisine 31 en provenance du premier serveur distant 13 et/ou du deuxième serveur distant 15.

Comme illustré à la figure 2, le résultat 33 comprend une liste ordonnée 35 de contenus non structurées 11 aptes à être téléchargés.

Le résultat 33 est affiché sur l'interface 3 de l'appareil culinaire 1 et peut être consulté par l'utilisateur. Lorsque l'utilisateur effectue une nouvelle recherche un nouveau résultat 33 est affiché selon le même principe.

Une étape E4 consiste en l'envoi à destination du premier serveur distant 13 et/ou du deuxième serveur distant 15 d'une demande de téléchargement 37 d'un groupe 38 de contenus non structurés 11 consécutifs de la liste ordonnée 35.

Cet envoi fait suite à une interaction de l'utilisateur avec l'interface 3 de l'appareil culinaire 1.

En pratique et comme illustré à la figure 2, l'utilisateur sélectionne sur l'interface 3 un contenu déterminé 39 et le groupe 38 comprend un premier nombre de contenus le précédant et un deuxième nombre de contenus le suivant.

Une étape E5 consiste en un téléchargement et un stockage dans un espace de la mémoire 17 de l'unité de connexion 5 de tout ou partie de chaque contenu non structuré 11 du groupe 38 de contenus non structurés 11 consécutifs de la liste ordonnée 35 jusqu'à atteindre la restriction de la connexion sécurisée 27 si elle est atteinte.

Une étape E6 consiste en un transfert de chaque contenu non structuré 11 stocké dans la mémoire 17 de l'unité de connexion 5 vers la mémoire 19 de l'unité d'affichage 7, chaque contenu non structuré 11 transféré depuis la mémoire 17 de l'unité de connexion 5 vers l'unité d'affichage 7 libérant un espace de la mémoire 17 de l'unité de connexion 5 de manière à continuer l'étape E5 de stockage.

Une étape E7 consiste en la structuration des contenus non structurés 11 stockés dans la mémoire 19 de l'unité d'affichage 7 par les moyens de traitement 21 de l'unité d'affichage 7.

Ainsi comme illustré à la figure 3, le groupe 38 de la liste ordonnée 35 qui a été téléchargé peut-être affiché.

Ici, la demande de téléchargement est relative à un groupe 38 de la liste ordonnée 35 comprenant le contenu déterminé 39, trois contenus le précédant et six contenus le suivant.

Par groupe 38 de la liste ordonnée 35, on entend une partie des contenus constituant la liste ordonnée 35.

Quatre contenus structurés 23 sont affichés et les six autres sont en mémoire 19 au cas où l'utilisateur veuille les consulter sans qu'il ne soit nécessaire d'attendre.

L'étape E4 peut être réitérée suite à une interaction de l'utilisateur avec l'interface 3 de l'appareil culinaire 1. Ainsi, chaque étape E4 d'envoi concerne un groupe 38 correspondant de contenus non structurés 11 consécutifs de la liste ordonnée 35.

Comme illustré à la figure 3, l'utilisateur peut sélectionner un nouveau contenu déterminé 39' et le faire glisser tout à gauche de l'interface 3. Le nouveau contenu déterminé 39' remplace ainsi le contenu déterminé 39 antérieur. Les trois contenus structurés 23 suivant le nouveau contenu déterminé 39' étant prêt à être affichés car présents en mémoire 19 de l'unité d'affichage 7, l'utilisateur n'a pas à attendre.

Suite à cette interaction un nouveau groupe 38' de la liste ordonnée 35 est téléchargé en appliquant les étapes E5 à E7.

L'étape E6 est également suivie par une étape E61 de substitution et/ou de conservation des contenus structurés 23 et/ou non structurés 11 préalablement en mémoire 19 de l'unité d'affichage 7.

Ainsi les trois premiers contenus de la figure 3 sont substitués par de nouveaux contenus structurés 23 et les sept derniers contenus structurés 23 sont conservés en mémoire 19 de l'unité d'affichage 7.

Si la restriction de la connexion sécurisée 29 est atteinte, les étapes E1 à E7 peuvent être réitérées :
- soit les étapes E2 à E7 sont réitérées en considérant un nouveau résultat 33 relatif à la même requête de recherche 31 de recettes de cuisine, ou bien
- soit les étapes E2 à E7 sont réitérées en considérant un résultat 33 complémentaire relatif à la requête de recherche 31 établie sur la base des contenus non structurés 11 consécutifs de la liste ordonnée 35 non encore téléchargés, l'étape E1 étant réitérée jusqu'à ce que le groupe 38 des contenus non structurés 11 téléchargeables consécutifs de la liste ordonnée 35 ait été téléchargé.

Le procédé de traitement ainsi décrit permet de ne télécharger qu'un groupe 38 de la liste ordonnée tout en permettant à l'utilisateur d'avoir accès à toute la liste ordonnée 35 car le téléchargement est complété en fonction des interactions de l'utilisateur.

Ce procédé permet ainsi de limiter la mémoire 19 de l'unité d'affichage 7 et plus encore de l'unité de connexion 5, les contenus 11 étant téléchargés de manière non structurés c'est-à-dire par portions.

Ceci est également possible grâce à l'utilisation d'une connexion sécurisée permanente car il n'est pas nécessaire de rétablir la connexion avec un ou plusieurs serveurs distants 13, 15 à chaque demande de téléchargement 37. L'utilisateur a donc accès à la liste ordonnée 35 issue de la recherche comme si tous les contenus structurés 23 étaient enregistrés en mémoire 19 de l'unité d'affichage 7 alors que seul une partie de ces contenus structurés 23 sont en mémoire 19.

Comme il va de soi, l'invention ne se limite pas à la seule forme d'exécution décrite ci-dessus à titre d'exemple, elle en embrasse au contraire toutes les variantes de réalisation dans la limite des revendications ci-jointes.

## Revendications

1. Procédé de traitement de contenus non structurés (11) de recettes de cuisine par un appareil culinaire (1), l'appareil culinaire (1) comprenant :
- une unité de connexion (5) comprenant un module de communication (9) configuré pour recevoir des contenus non structurés (11) en provenance d'au moins un serveur distant (13, 15) et une mémoire (17),
et
- une unité d'affichage (7) comprenant une mémoire (19) configurée pour recevoir lesdits contenus non structurés (11) en provenance de la mémoire (17) de l'unité de connexion (5) et des moyens de traitement (21) configurés pour structurer lesdits contenus non structurés (11) de recettes de cuisine,
un contenu non structuré comprenant plusieurs portions de données distinctes aptes à être téléchargées séparément, et un contenu structuré étant en une seule partie et apte à être exploité par l'unité d'affichage (7) ; le procédé de traitement de contenus non structurés (11) de recettes de cuisine comprenant les étapes suivantes :
- (E1) une étape d'établissement d'une connexion sécurisée (25) entre l'appareil culinaire (1) et l'au moins un serveur distant (13, 15) comprenant un envoi d'une requête d'établissement (27) d'une connexion sécurisée (25) par l'appareil culinaire (1) à destination de l'au moins un serveur distant (13, 15), l'au moins un serveur distant (13, 15) imposant une restriction de la connexion sécurisée (29) relative à une quantité maximale de contenus non structurés (11) à télécharger sur l'appareil culinaire (1) et/ou une durée déterminée de maintien de la connexion sécurisée (25),
- (E2) une étape d'envoi d'une requête de recherche (31) de recettes de cuisines à destination de l'au moins un serveur distant (13, 15) en utilisant la connexion sécurisée (25),
- (E3) une étape de réception d'un résultat (33) relatif à ladite requête de recherche (31) de recettes de cuisine, le résultat (33) comprenant une liste ordonnée (35) de contenus non structurées (11) aptes à être téléchargés,
- (E4) une étape d'envoi à destination de l'au moins un serveur distant (13, 15) d'une demande de téléchargement (37) d'un groupe (38) de contenus non structurés (11) consécutifs de la liste ordonnée (35),
- (E5) une étape de téléchargement et de stockage dans un espace de la mémoire (17) de l'unité de connexion (5) de tout ou partie de chaque contenu non structuré (11) du groupe (38) de contenus non structurés (11) consécutifs de la liste ordonnée (35) jusqu'à atteindre la restriction (29) imposée par la connexion sécurisée (25),
- (E6) une étape de transfert de chaque contenu non structuré (11) stocké dans un espace de la mémoire (17) de l'unité de connexion (5) vers un espace de la mémoire (19) de l'unité d'affichage (7), chaque contenu non structuré (11) transféré depuis la mémoire (17) de l'unité de connexion (5) vers la mémoire (19) de l'unité d'affichage (7) libérant un même espace de la mémoire (17) de l'unité de connexion (5) de manière à continuer l'étape de téléchargement et de stockage (E5),
- (E7) une étape de structuration des contenus non structurés (11) stockés dans la mémoire (19) de l'unité d'affichage (7) par les moyens de traitement (21) de l'unité d'affichage (7).

2. Procédé de traitement selon la revendication 1, dans lequel une fois atteinte la restriction (29) imposée par l'établissement de la connexion sécurisée (25), l'étape (E1) est réitérée et :
- soit les étapes (E2) à (E7) sont réitérées en considérant un nouveau résultat (33) relatif à la même requête de recherche (31) de recettes de cuisine, ou bien
- soit les étapes (E2) à (E7) sont réitérées en considérant un résultat (33) complémentaire relatif à la requête de recherche (31) établie sur la base des contenus non structurés (11) consécutifs de la liste ordonnée (35) non encore téléchargés, l'étape (E1) étant réitérée jusqu'à ce que le groupe (38) des contenus non structurés (11) téléchargeables consécutifs de la liste ordonnée (35) ait été téléchargé.

3. Procédé de traitement selon la revendication 2, dans lequel l'étape de transfert (E6) est suivie par et/ou est concomitante d'une étape (E61) de substitution et/ou de conservation des contenus structurés (23) et/ou non structurés (11) préalablement en mémoire (19) de l'unité d'affichage (7).

4. Procédé de traitement selon l'une des revendications 1 à 3, comprenant une pluralité d'étapes d'envoi (E4) de demandes de téléchargement (37), chaque étape d'envoi (E4) concernant un groupe (38, 38') correspondant de contenus non structurés (11) consécutifs de la liste ordonnée (35).

5. Procédé de traitement selon la revendication 4, dans lequel la pluralité d'étapes d'envoi (E4) comprend deux étapes d'envoi (E4) de demandes de téléchargement (37) consécutives pour lesquelles les groupes (38, 38') correspondants comprennent au moins un contenu non structuré (11) en commun.

6. Procédé de traitement selon l'une des revendications 1 à 5, dans lequel le ou chaque envoi de requête de recherche (31) et/ou de demande de téléchargement (37) résulte d'une interaction d'un utilisateur avec une interface (3) de l'appareil culinaire (1) apte à échanger des données avec l'unité d'affichage (7).

7. Procédé de traitement selon l'une des revendications 1 à 6, dans lequel l'unité de connexion (5) est configurée pour échanger des données avec une pluralité de serveurs distants (13, 15) de sorte à établir des connexions sécurisées (25) avec plusieurs serveurs (13, 15) et recevoir différents contenus non structurés (11) de différents serveurs (13, 15) de la pluralité de serveurs (13, 15).

8. Procédé de traitement selon l'une des revendications 1 à 7, dans lequel l'unité d'affichage (7) présente des capacités de traitement et/ou de mémoire volatile et/ou non-volatile supérieures aux capacités de traitement et/ou de mémoire volatile et/ou non-volatile de l'unité de connexion (5).

9. Procédé de traitement selon l'une des revendications 1 à 8, dans lequel l'unité de connexion (5) comprend un microcontrôleur (8) fonctionnant à une fréquence CPU inférieure à 250 MHz.

10. Procédé de traitement selon la revendication 9, dans lequel le microcontrôleur (8) de l'unité de connexion (5) comprend au maximum 2 Mo de mémoire flash et/ou au maximum 512 ko de mémoire RAM.

11. Procédé de traitement selon l'une des revendications 1 à 10, dans lequel chaque contenu structuré (23) comprend des informations pour l'affichage d'un texte, une image, une vidéo et/ou des instructions de commande de fonctionnement de l'appareil culinaire.

12. Procédé de traitement selon l'une des revendications 1 à 11, dans lequel le module de communication (9) de l'unité de connexion (5) est agencé pour se connecter à l'au moins un serveur distant (13, 15) via une passerelle d'un réseau domestique local, ou via un appareil mobile connecté à un réseau mobile, ou encore directement via le réseau mobile.

13. Produit programme d'ordinateur comprenant des instructions de code agencées pour mettre en œuvre les étapes d'un procédé de traitement selon l'une des revendications 1 à 12 lorsque ledit programme est exécuté sur une unité de connexion (5) et une unité d'affichage (7) d'un appareil culinaire (1).

14. Appareil culinaire (1) comprenant un produit programme d'ordinateur selon la revendication 13.

## Patentansprüche

1. Verfahren zur Verarbeitung von unstrukturierten Inhalten (11) von Kochrezepten durch ein Kulinarische Vorrichtung (1), wobei das Kulinarische Vorrichtung (1) umfasst:
- eine Verbindungseinheit (5) mit einem Kommunikationsmodul (9), das so konfiguriert ist, dass es unstrukturierte Inhalte (11) von mindestens einem entfernten Server (13, 15) empfängt, und einem Speicher (17),
und
- eine Anzeigeeinheit (7) mit einem Speicher (19), der so konfiguriert ist, dass er die unstrukturierten Inhalte (11) aus dem Speicher (17) der Verbindungseinheit (5) empfängt, und mit Verarbeitungsmitteln (21), die so konfiguriert sind, dass sie die unstrukturierten Inhalte (11) von Kochrezepten strukturieren,
ein unstrukturierter Inhalt mehrere unterschiedliche Datenportionen umfasst, die geeignet sind, separat heruntergeladen zu werden, und ein strukturierter Inhalt aus einem einzigen Teil besteht und geeignet ist, von der Anzeigeeinheit (7) ausgewertet zu werden;
das Verfahren zur Verarbeitung von unstrukturierten Inhalten (11) von Kochrezepten die folgenden Schritte umfasst:
- (E1) einen Schritt zum Aufbau einer gesicherten Verbindung (25) zwischen dem Kulinarische Vorrichtung (1) und dem mindestens einen entfernten Server (13, 15), der ein Senden einer Anfrage zum Aufbau (27) einer gesicherten Verbindung (25) durch das Kulinarische Vorrichtung (1) an den mindestens einen entfernten Server (13, 15), wobei der mindestens eine entfernte Server (13, 15) eine Beschränkung der gesicherten Verbindung (29) in Bezug auf eine maximale Menge an unstrukturierten Inhalten (11), die auf das kulinarische Gerät (1) heruntergeladen werden sollen, und/oder eine bestimmte Dauer der Aufrechterhaltung der gesicherten Verbindung (25) auferlegt,
- (E2) einen Schritt des Sendens einer Suchanfrage (31) nach Kochrezepten an den mindestens einen entfernten Server (13, 15) unter Verwendung der gesicherten Verbindung (25),
- (E3) einen Schritt des Empfangens eines Ergebnisses (33) bezüglich der Suchanfrage (31) nach Kochrezepten, wobei das Ergebnis (33) eine geordnete Liste (35) von unstrukturierten Inhalten (11) umfasst, die zum Herunterladen geeignet sind,
- (E4) einen Schritt des Sendens an den mindestens einen entfernten Server (13, 15) einer Anforderung zum Herunterladen (37) einer Gruppe (38) aufeinanderfolgender unstrukturierter Inhalte (11) der geordneten Liste (35),
- (E5) einen Schritt des Herunterladens und Speicherns in einem Raum des Speichers (17) der Verbindungseinheit (5) von allen oder einem Teil jedes unstrukturierten Inhalts (11) der Gruppe (38) aufeinanderfolgender unstrukturierter Inhalte (11) der geordneten Liste (35), bis die durch die sichere Verbindung (25) auferlegte Beschränkung (29) erreicht ist,
- (E6) einen Schritt des Übertragens jedes unstrukturierten Inhalts (11), der in einem Raum des Speichers (17) der Verbindungseinheit (5) gespeichert ist, zu einem Raum des Speichers (19) der Anzeigeeinheit (7), jeder unstrukturierte Inhalt (11), der von dem Speicher (17) der Verbindungseinheit (5) zu dem Speicher (19) der Anzeigeeinheit (7) übertragen wird, einen gleichen Raum des Speichers (17) der Verbindungseinheit (5) freigibt, um den Schritt des Herunterladens und Speicherns (E5) fortzusetzen,
- (E7) einen Schritt zum Strukturieren der unstrukturierten Inhalte (11), die in dem Speicher (19) der Anzeigeeinheit (7) gespeichert sind, durch die Verarbeitungsmittel (21) der Anzeigeeinheit (7).

2. Verarbeitungsverfahren nach Anspruch 1, bei dem nach Erreichen der durch den Aufbau der gesicherten Verbindung (25) auferlegten Beschränkung (29) der Schritt (E1) wiederholt wird und:
- oder die Schritte (E2) bis (E7) werden unter Berücksichtigung eines neuen Ergebnisses (33) bezüglich derselben Suchanfrage (31) nach Kochrezepten wiederholt, oder
- oder die Schritte (E2) bis (E7) werden unter Berücksichtigung eines zusätzlichen Ergebnisses (33) bezüglich der Suchanfrage (31), die auf der Grundlage der aufeinanderfolgenden, noch nicht heruntergeladenen unstrukturierten Inhalte (11) der geordneten Liste (35) erstellt wurde, wiederholt, wobei der Schritt (E1) wiederholt wird, bis die Gruppe (38) der aufeinanderfolgenden, herunterladbaren unstrukturierten Inhalte (11) der geordneten Liste (35) heruntergeladen worden ist.

3. Verarbeitungsverfahren nach Anspruch 2, bei dem auf den Übertragungsschritt (E6) ein Schritt (E61) zum Ersetzen und/oder Behalten von strukturierten (23) und/oder unstrukturierten (11) Inhalten, die zuvor im Speicher (19) der Anzeigeeinheit (7) gespeichert wurden, folgt und/oder damit einhergeht.

4. Verarbeitungsverfahren nach einem der Ansprüche 1 bis 3, umfassend eine Vielzahl von Schritten zum Senden (E4) von Download-Anforderungen (37), wobei jeder Schritt zum Senden (E4) eine entsprechende Gruppe (38, 38') aufeinanderfolgender unstrukturierter Inhalte (11) der geordneten Liste (35) betrifft.

5. Verarbeitungsverfahren nach Anspruch 4, wobei die mehreren Sendeschritte (E4) zwei Sendeschritte (E4) von aufeinanderfolgenden Download-Anforderungen (37) umfassen, bei denen die entsprechenden Gruppen (38, 38') mindestens einen unstrukturierten Inhalt (11) gemeinsam haben.

6. Verarbeitungsverfahren nach einem der Ansprüche 1 bis 5, wobei das oder jedes Senden einer Suchanfrage (31) und/oder einer Downloadanfrage (37) aus einer Interaktion eines Benutzers mit einer Schnittstelle (3) des Kulinarische Vorrichtung (1) resultiert, die in der Lage ist, Daten mit der Anzeigeeinheit (7) auszutauschen.

7. Verarbeitungsverfahren nach einem der Ansprüche 1 bis 6, wobei die Verbindungseinheit (5) so konfiguriert ist, dass sie Daten mit einer Vielzahl von entfernten Servern (13, 15) austauscht, um sichere Verbindungen (25) mit mehreren Servern (13, 15) herzustellen und verschiedene unstrukturierte Inhalte (11) von verschiedenen Servern (13, 15) der Vielzahl von Servern (13, 15) zu empfangen.

8. Verarbeitungsverfahren nach einem der Ansprüche 1 bis 7, wobei die Anzeigeeinheit (7) größere flüchtige und/oder nichtflüchtige Verarbeitungs-und/oder Speicherkapazitäten aufweist als die flüchtigen und/oder nichtflüchtigen Verarbeitungs- und/oder Speicherkapazitäten der Anschlusseinheit (5).

9. Verarbeitungsverfahren nach einem der Ansprüche 1 bis 8, wobei die Verbindungseinheit (5) einen Mikrocontroller (8) umfasst, der mit einer CPU-Frequenz von weniger als 250 MHz arbeitet.

10. Verarbeitungsverfahren nach Anspruch 9, wobei der Mikrocontroller (8) der Verbindungseinheit (5) maximal 2 MB Flash-Speicher und/oder maximal 512 kB RAM-Speicher umfasst.

11. Verarbeitungsverfahren nach einem der Ansprüche 1 bis 10, wobei jeder strukturierte Inhalt (23) Informationen zur Anzeige eines Textes, eines Bildes, eines Videos und/oder Steueranweisungen zum Betrieb des Kulinarische Vorrichtung umfasst.

12. Verarbeitungsverfahren nach einem der Ansprüche 1 bis 11, wobei das Kommunikationsmodul (9) der Verbindungseinheit (5) so eingerichtet ist, dass es sich mit dem mindestens einen entfernten Server (13, 15) über ein Gateway eines lokalen Heimnetzwerks oder über ein mit einem Mobilnetzwerk verbundenes Mobilgerät oder direkt über das Mobilnetzwerk verbindet.

13. Computerprogrammprodukt mit Codeanweisungen, die so angeordnet sind, dass sie die Schritte eines Verarbeitungsverfahrens nach einem der Ansprüche 1 bis 12 ausführen, wenn das Programm auf einer Anschlusseinheit (5) und einer Anzeigeeinheit (7) eines Kulinarische Vorrichtung (1) ausgeführt wird.

14. Kulinarische Vorrichtung (1), das ein Computerprogrammprodukt nach Anspruch 13 umfasst.

## Claims

1. A method for processing unstructured contents (11) of cooking recipes by a culinary appliance (1), the culinary appliance (1) comprising:
- a connection unit (5) comprising a communication module (9) configured to receive unstructured content (11) from at least one remote server (13, 15) and a memory (17),
and
- a display unit (7) comprising a memory (19) configured to receive said unstructured contents (11) from the memory (17) of the connection unit (5) and processing means (21) configured to structure said unstructured contents (11) of cooking recipes,
unstructured content comprising several distinct data portions capable of being downloaded separately, and structured content being in a single part and capable of being used by the display unit (7);
the method for processing unstructured contents (11) of cooking recipes comprising the following steps:
- (E1) a step of setting up a secure connection (25) between the culinary appliance (1) and the at least one remote server (13, 15) comprising sending a request (27) for setting up a secure connection (25) by the culinary appliance (1) to the at least one remote server (13, 15), the at least one remote server (13, 15) imposing a restriction on the secure connection (29) relating to a maximum quantity of unstructured content (11) to be downloaded onto the culinary appliance (1) and/or a specified duration for maintaining the secure connection (25),
- (E2) a step of sending a search request (31) for recipes to the at least one remote server (13, 15) using the secure connection (25),
- (E3) a step of receiving a result (33) relating to said search request (31) for cooking recipes, the result (33) comprising an ordered list (35) of unstructured content (11) suitable for downloading,
- (E4) a step of sending a download request (37) for a group (38) of consecutive unstructured contents (11) from the ordered list (35) to at least one remote server (13, 15),
- (E5) a step of downloading and storing in a space of the memory (17) of the connection unit (5) all or part of each unstructured content (11) of the group (38) of consecutive unstructured contents (11) of the ordered list (35) until the restriction (29) imposed by the secure connection (25) is reached,
- (E6) a step of transferring each unstructured content (11) stored in a space of the memory (17) of the connection unit (5) to a space of the memory (19) of the display unit (7), each unstructured content (11) transferred from the memory (17) of the connection unit (5) to the memory (19) of the display unit (7) freeing a same space of the memory (17) of the connection unit (5) so as to continue the downloading and storing step (E5),
- (E7) a step of structuring the unstructured contents (11) stored in the memory (19) of the display unit (7) by the processing means (21) of the display unit (7).

2. Processing method according to claim 1, in which once the restriction (29) imposed by the establishment of the secure connection (25) has been reached, step (E1) is repeated and :
- either steps (E2) to (E7) are repeated, taking into account a new result (33) relating to the same search request (31) for cooking recipes, or
- or steps (E2) to (E7) are repeated considering a complementary result (33) relating to the search request (31) established on the basis of the consecutive unstructured contents (11) of the ordered list (35) not yet downloaded, step (E1) being repeated until the group (38) of consecutive downloadable unstructured contents (11) of the ordered list (35) has been downloaded.

3. Processing method according to claim 2, in which the transfer step (E6) is followed by and/or is concomitant with a step (E61) of substituting and/or retaining structured (23) and/or unstructured (11) contents previously in the memory (19) of the display unit (7).

4. Processing method according to one of claims 1 to 3, comprising a plurality of steps (E4) of sending download requests (37), each sending step (E4) relating to a corresponding group (38, 38') of consecutive unstructured contents (11) of the ordered list (35).

5. Processing method according to claim 4, wherein the plurality of sending steps (E4) comprises two sending steps (E4) of consecutive download requests (37) for which the corresponding groups (38, 38') comprise at least one unstructured content (11) in common.

6. Processing method according to one of claims 1 to 5, in which the or each sending of a search request (31) and/or download request (37) results from a user interacting with an interface (3) of the culinary appliance (1) capable of exchanging data with the display unit (7).

7. Processing method according to one of claims 1 to 6, wherein the connection unit (5) is configured to exchange data with a plurality of remote servers (13, 15) so as to establish secure connections (25) with several servers (13, 15) and receive different unstructured contents (11) from different servers (13, 15) of the plurality of servers (13, 15).

8. Processing method according to one of claims 1 to 7, in which the display unit (7) has greater processing and/or volatile and/or non-volatile memory capacities than the processing and/or volatile and/or non-volatile memory capacities of the connection unit (5).

9. A processing method according to one of claims 1 to 8, wherein the connection unit (5) comprises a microcontroller (8) operating at a CPU frequency of less than 250 MHz.

10. Processing method according to claim 9, in which the microcontroller (8) of the connection unit (5) comprises a maximum of 2 MB of flash memory and/or a maximum of 512 kB of RAM memory.

11. Processing method according to one of claims 1 to 10, in which each structured content (23) comprises information for displaying a text, an image, a video and/or control instructions for operating the culinary appliance.

12. Processing method according to one of claims 1 to 11, in which the communication module (9) of the connection unit (5) is arranged to connect to the at least one remote server (13, 15) via a gateway of a local home network, or via a mobile device connected to a mobile network, or even directly via the mobile network.

13. Computer program product comprising code instructions arranged to implement the steps of a processing method according to one of claims 1 to 12 when said program is executed on a connection unit (5) and a display unit (7) of a culinary appliance (1).

14. A culinary appliance (1) comprising a computer program product
according to claim 13.
